# EUROPEAN PATENT SPECIFICATION

(11) **EP 2 712 959 B1**
(45) Date of publication and mention of the grant of the patent: **19.11.2014**
(21) Application number: 12186554.7
(22) Date of filing: 28.09.2012
(51) Int. Cl.: D21H 13/08, D21H 27/08, A47J 31/08, B01D 39/16, B65D 85/808

(54) **Transparent filter material**
Transparentes Filtermaterial
Matériau de filtre transparent

(43) Date of publication of application: 02.04.2014
(73) Proprietor: Glatfelter Gernsbach GmbH & Co. KG, 76593 Gernsbach (DE)
(72) Inventor: Meger, Danny, 76593 Gernsbach (DE); Kellner, Jürgen Dr., 69502 Hemsbach (DE)
(74) Representative: Dilg, Haeusler, Schindelmann Patentanwaltsgesellschaft mbH

(56) References cited:
- EP-A1- 1 325 979
- WO-A1-2004/018770
- US-A- 5 387 319

## Description

### Field of the Invention

The present invention relates to a transparent filter material, a method for producing the transparent filter material and tea bags or coffee pads or pods made from the transparent filter material.

### Background of the Invention

Most of current infusion bags, such as tea bags or coffee pads or pods, are only little transparent so that consumers usually cannot visually examine the quality of the infusible material contained in the infusion bag. In particular in case of tea but also of coffee where consumers are familiar with loose tea, coffee beans or coffee powder, the lack of transparency of the infusion bags is prejudicial in that the consumers may believe the tea or coffee contained is of minor quality, inferior to loose tea or coffee beans.

As a consequence, there is a strong demand to provide transparent filter material, both for heat-sealable and non-heat-sealable materials, suitable for infusion bags, such as tea bags or coffee pads or pods, that allows consumers to visually inspect the infusible material contained.

On the other hand, infusion bags, such as tea bags or coffee pads or pods, are mass-produced articles requiring an easy and cost-effective production, in terms of both the material of the filter and the packaging of the tea or coffee into the bags or pouches, which is preferably carried out by means of conventional packaging machines.

WO 02/48443 discloses a nonwoven infusion package material with improved translucency comprising a first web layer of parallel or randomised bicomponent thermoplastic fibers that is through air bonded to a second web layer of parallel or randomised bicomponent thermoplastic fibers. However, this nonwoven infusion package material has been proven not yet satisfactory in terms of both transparency and ease of manufacture.

Nonwoven materials (manufactured by Ohki Co. Ltd, Japan) and woven materials (manufactured by Yamanaka Industries Co. Ltd, Japan) having high transparency are known. However, these materials are not heat-sealable, but can be only ultrasonically sealed which requires a specialised equipment that is not suitable for high-speed manufacture.

EP 1553224 A1 discloses a nonwoven fabric having transparency which is suitable for a tea bag, the nonwoven fabric being a laminate of a thermoplastic synthetic fiber spun-bonded nonwoven fabric having an average fiber diameter of 7 to 15 µm and a thermoplastic synthetic fiber spun-bonded nonwoven fabric having an average fiber diameter of 15 to 40 µm.

EP 2266791 A1 discloses a fiber sheet having transparency and is obtained by laminating a nonwoven fabric on a gauze.

However, these laminated materials are too expensive for mass tea bag production.

Thus, the demand for a transparent filter material suitable for a mass-produced article, such as tea bags or coffee pads or pods, enabling the packaging of the tea or coffee into the pouches by means of conventional packaging machines has not yet been satisfied.

Recently, a transparent fiber made of viscose and having an extremely flat cross section has been made available by Kelheim Fibres GmbH. However, the present inventors have found that a sufficiently high transparency can only be obtained with a large content of these flat viscose fibers in the filter material. On the other hand, due to a lack of hydrogen bonds compared with natural fibers, viscose fibers can hardly bond to each other or to other natural fibers and in view of the necessity of a large content of these flat viscose fibers in the filter material for achieving a sufficiently high transparency, important characteristics of the filter material are impaired, such as the tensile strength and the breaking length, in particular the tensile strength in a wet and/or hot state, which is of particular importance for a filter material for infusion beverages, such as tea or coffee.

### Object of the Invention

The present invention aims at overcoming the above described problems and drawbacks. Thus, the object of the present invention is to provide a transparent filter material, that can be easily and cost-effectively prepared by a paper-making process and that enables the packaging of tea or coffee into bags or pouches made of the transparent filter material by means of conventional packaging machines. Both, heat-sealable and non-heat-sealable filter materials are desired.

### Summary of the Invention

The present inventors have made diligent studies and have found that by adding highly beaten cellulosic fibers to transparent fibers, the object of the present invention can be solved. The present inventors have in particular found that by the addition of highly beaten cellulosic fibers, a filter material comprising transparent fibers can be provided with a significantly increased tensile strength and elongation, while substantially maintaining the transparency of the filter material. The present inventors have further found that by the combination of highly beaten cellulosic fibers and at least one binder, a filter material comprising transparent fibers can be provided with an even further significantly increased tensile strength and elongation, while substantially maintaining the transparency of the filter material.

Accordingly, the present invention relates to a filter material, comprising transparent viscose fibers and highly beaten cellulosic fibers having a beating degree in the range of from 30 to 80 Schopper Riegler, wherein the transparent viscose fibers are contained in an amount of from 20 to 95 wt.-% based on the entire filter material and the highly beaten cellulosic fibers are contained in an amount of from 5 to 80 wt.-% based on the entire filter material. Preferably, the filter material further comprises at least one binder.

The present invention further relates to the use of highly beaten cellulosic fibers having a beating degree in the range of from 30 to 80 Schopper Riegler for imparting tensile strength to a filter material comprising transparent viscose fibers, preferably the combined use of highly beaten cellulosic fibers and at least one binder for imparting tensile strength to a filter material comprising transparent fibers.

Moreover, the present invention relates to a process for producing a filter material comprising transparent viscose fibers in an amount of from 20 to 95 wt.-% based on the entire filter material, characterized by the step of applying highly beaten cellulosic fibers having a beating degree in the range of from 30 to 80 Schopper Riegler in an amount of from 5 to 80 wt.-% based on the entire filter material and preferably at least one binder.

Finally, the present invention relates to tea bags or coffee pads or pods made from the filter material according to the present invention.

### Detailed Description of the Invention

Hereinafter, details of the present invention and other features and advantages thereof will be described. However, the present invention is not limited to the following specific descriptions and embodiments, but they are rather for illustrative purposes only.

The present invention provides a filter material, comprising transparent fibers and highly beaten cellulosic fibers.

The expression "comprising", as used herein, includes not only the meaning of "comprising" but also encompasses "consisting essentially of" and "consisting of".

The term "transparent" means sufficiently translucent for a naked eye to ascertain the shape and color of a particulate infusible material, such as tea or coffee. It can be measured in terms of percentage of light that passes through the material using a photospectrometer.

The term "highly beaten (cellulosic) fibers", as used herein, denotes (cellulosic) fibers that have a high beating degree (or freeness value) in the range of from 30 to 80 SR (Schopper Riegler), preferably from 40 to 70 SR, more preferably from 50 to 60 SR, in particular about 55 SR. The beating degree according to Schopper Riegler can be determined for instance in accordance with DIN ISO 5267-1.

The transparent fibers according to the present invention are viscose fibers. Preferably, the viscose fibers have a flat cross section, such as a ratio of width to thickness of 10:1 or more, more preferably 20:1 or more, most preferably about 40:1. It is further preferred that the transparent viscose fibers have an even or smooth surface.

The transparent fibers according to the present invention are contained in the filter material in an amount of from 20 to 95 wt.-% based on the entire filter material, preferably from 30 to 90 wt.-%, most preferably from 40 to 80 wt.-%.

The highly beaten cellulosic fibers according to the present invention are preferably highly beaten hemp, manila, jute, sisal or abaca fibers or mixtures thereof. It is particularly preferred that the highly beaten cellulosic fibers according to the present invention comprise highly beaten abaca fibers, which have proven to provide excellent results.

These highly beaten cellulosic fibers are commercially available, but they can also be readily prepared, as it well known to a person skilled in the art, by beating the respective cellulosic fibers, for instance by a Holländer or Refiner.

The highly beaten cellulosic fibers according to the present invention are contained in the filter material in an amount of from 5 to 80 wt.-% based on the entire filter material, preferably from 10 to 70 wt.-%, most preferably from 20 to 60 wt.-%.

In a particularly preferred embodiment, the filter material according to the present invention further comprises at least one binder.

The binder according to the present invention is preferably a water-soluble binder.

The binder according to the present invention preferably comprises at least one synthetic binder. It is particularly preferred that the binder according to the present invention comprises a styrene/acrylate copolymer, most preferably a styrene/n-butyl acrylate copolymer, such as Acronal S 728 (available from BASF SE).

From a viewpoint of conservation of resources, it is also preferred that the binder according to the present invention comprises at least one bio-based binder. A bio-based binder is a binder which can be obtained from natural sources, such as plants or microorganisms, and which is typically biodegradable, which is advantageous when the filter material is subjected to composting after use.

Mixtures of synthetic and bio-based binders are also suitable.

The binder according to the present invention is preferably contained in the filter material in an amount of from 0.5 to 15 wt.-% based on the entire filter material, more preferably from 1 to 10 wt.-%, most preferably from 4 to 9 wt.-%.

If a binder is present, the weight ratio of the highly beaten cellulosic fibers to the binder is preferably from 40:1 to 0.5:1, more preferably 20:1 to 1:1, most preferably 6:1 to 2:1.

Further components or additives typically used in a filter material can be contained in the filter material according to the present invention as long as they do not significantly impair the transparency or other important characteristics of the filter material. Suitable examples include natural or synthetic heat-sealable fibers, such as polyethylene pulp or bicomponent fibers, and wet-strength agents. A wet-strength agent is an agent that improves the tensile strength of a filter material in wet condition. Suitable examples of the wet-strength agent include a melamine-formaldehyde resin or a polyamine-polyamide-epichlorohydrine resin.

Preferably, the filter material according to the present invention further comprises polyethylene pulp (PE pulp). The present inventors have found that by the addition of PE pulp, the transparency of the filter material can be further increased, without imparting its mechanical properties. Without wishing to be bound by any theory, the present inventors assume that by the addition of PE pulp, which melts at high temperatures without forming nodules, the molten PE pulp forms a film on the surface of the filter material during the drying process in the paper machine, thereby further increasing the transparency of the filter material.

The grammage or basis weight of the filter material according to the present invention is not particularly limited. Typically, the filter material has a grammage of from 8 to 120 g/m², preferably from 10 to 40 g/m², most preferably 12 to 30 g/m².

The length and the coarseness of the transparent fibers are not particularly limited, as long as the fibers are transparent. The coarseness of a fiber is defined as the weight per unit length of the fibre. Typically, the transparent fibers have a length of from 1 to 15 mm, preferably from 2 to 12 mm. Typically, the transparent fibers have a coarseness of from 1.5 to 12 dtex, preferably from 4 to 9 dtex.

The filter material according to the present invention is preferably a filter material for tea or coffee, but the filter material according to the present invention can also be used for other infusible materials.

In a preferred embodiment, the filter material according to the present invention is heat-sealable. For achieving heat-sealability of the filter material according to the present invention, it is typically sufficient that heat-sealable fibers are contained in an amount of from 15 to 35 wt.-% based on the entire filter material, preferably from 20 to 30 wt.-%.

Depending on its purpose of use, it may also be preferred that the filter material according to the present invention is non-heat-sealable.

The filter material according to the present invention can be prepared by a conventional paper-making process using a paper machine, preferably an inclined wire paper machine, wherein transparent fibers, highly beaten cellulosic fibers and optionally at least one binder are applied. A conventional paper-making process is described for instance in US 2004/0129632 A1, the disclosure of which is incorporated herein by reference.

The process for producing a filter material comprising transparent fibers according to the present invention is characterized in that highly beaten cellulosic fibers are applied. Preferably, at least one binder is also applied.

Preferably, the process for producing a filter material according to the present invention further comprises a step of hot embossing the filter material. The present inventors have found that thereby the transparency of the filter material can be further increased, without imparting its mechanical properties. Without wishing to be bound by any theory, the present inventors assume that by the application of heat and pressure in the step of hot embossing, a complete closing of pores can be achieved, thereby further increasing the transparency of the filter material.

The filter material according to the present invention is particularly well suited for hot or cold filtration, as well as filtration under a certain pressure, in view of its improved tensile strength and elongation compared with conventional transparent filter material. Moreover, it can be easily produced with a conventional paper-making process and does not require expensive materials making its production very cost-effective. Still further, the filter material can be processed and filled with infusible materials, such as tea or coffee, by means of conventional packaging machines, making it highly suitable for mass-produced articles, such as tea bags or coffee pads or pods.

The tea bags or coffee pads or pods according to the present invention are made from the filter material according to the present invention and are therefore not only transparent, thereby enabling a visual inspection of their content by the consumers both in a dry and a wet state of the pouches, but can be also versatilely utilized, like conventional non-transparent pouches, without a significant risk of rupture and discharge of the infusible material into the infusion beverage or the like.

### Examples

Filter materials having a composition as indicated in the examples below and further comprising a wet-strength agent in an amount of 0.6 wt.-% have been prepared by means of a laboratory sheet-forming apparatus (Rapid-Köthen).

Transparent fibers: viscose fibers (Leonardo available from Kelheim Fibres GmbH, Germany) Highly beaten cellulosic fibers: abaca fibers (Ga-Una Blue available from Newtech Pulp, Inc., Philippines) that have been beaten in a Holländer to a beating degree of about 55 SR.
Binder: styrene/n-butyl acrylate copolymer (Acronal S 728 available from BASF SE, Germany)

The properties of the resulting filter materials were determined as follows:

Air permeability (Akustron): using an "Akustron Air Permeability Tester (from Thwing-Albert Instrument Company) Dry tensile strength: in accordance with ISO 1924-2 Elongation: in accordance with ISO 1924-2
Transparency: using a photospectrometer "CADAS 200" (from Dr. Bruno Lange GmbH & Co. KG)

### Experiment 1

Filter materials comprising transparent fibers and/or highly beaten cellulosic fibers as indicated above and in a ratio as indicated in Table 1, further comprising a wet-strength agent in an amount of 0.6 wt.-% have been prepared. The results are shown in Table 1.

**Table 1:**

| | Content of highly beaten cellulosic fibers (%) | Content of transparent fibers (%) | Akustron [l/m*s] | Dry tensile strength [N] | Elongation [%] | Transparency |
|---|---|---|---|---|---|---|
| C.Ex.1 | 100 | 0 | 2059 | 4.69 | 1.32 | 21.5 |
| Ex.1 | 80 | 20 | 1812 | 6.2 | 1.86 | 25.2 |
| Ex.2 | 60 | 40 | 1924 | 4.7 | 1.55 | 25.2 |
| Ex.3 | 40 | 60 | 2128 | 2.9 | 1.07 | 32.9 |
| Ex.4 | 20 | 80 | 2516 | 1.65 | 0.78 | 30.8 |
| C.Ex.2 | 0 | 100 | Not possible to prepare a filter material | | | |

| | | | | | | |
|---|---|---|---|---|---|---|
| C.Ex. = Comparative Example Ex. = Example | | | | | | |

As it is evident from the results shown in Table 1, the filter materials according to the present invention (Examples 1 to 4) have superior properties in terms of tensile strength and elongation, while substantially maintaining the transparency of the filter material provided by the transparent fibers.

### Experiment 2

Filter materials comprising transparent fibers and highly beaten cellulosic fibers as indicated above and in a ratio as indicated in Table 1, further comprising a binder as indicated above in an amount of 7 wt.-% and a wet-strength agent in an amount of 0.6 wt.-% have been prepared. The results are shown in Table 2.

**Table 2:**

| | Content of highly beaten cellulosic fibers (%) | Content of transparent fibers (%) | Akustron [l/m*s] | Dry tensile strength [N] | Elongation [%] | Transparency |
|---|---|---|---|---|---|---|
| Ex. 5 | 80 | 20 | 2221 | 8.55 | 4.16 | 26.1 |
| Ex. 6 | 60 | 40 | 2346 | 6.53 | 4.37 | 30.0 |
| Ex. 7 | 40 | 60 | 2062 | 7.13 | 6.50 | 30.6 |
| Ex. 8 | 20 | 80 | 2460 | 5.93 | 7.85 | 35.6 |

| | | | | | | |
|---|---|---|---|---|---|---|
| Ex. = Example | | | | | | |

As it is evident from the results shown in Table 2, filter material further comprising a binder (Examples 5 to 8) have even further superior properties in terms of tensile strength and elongation, while substantially maintaining the transparency of the filter material provided by the transparent fibers.

While the present invention has been described in detail by way of specific embodiments and examples, the invention is not limited thereto and various alterations or modifications are possible, without departing from the scope of the invention.

## Claims

1. A filter material, comprising transparent viscose fibers and highly beaten cellulosic fibers having a beating degree in the range of from 30 to 80 Schopper Riegler, wherein the transparent viscose fibers are contained in an amount of from 20 to 95 wt.-% based on the entire filter material and the highly beaten cellulosic fibers are contained in an amount of from 5 to 80 wt.-% based on the entire filter material.

2. The filter material according to claim 1, further comprising at least one binder.

3. The filter material according to claim 1 or 2, wherein said transparent viscose fibers have a flat cross section.

4. The filter material according to any one of the preceding claims, wherein said highly beaten cellulosic fibers comprise highly beaten abaca fibers.

5. The filter material according to any one of claims 2 to 4, wherein said at least one binder comprises at least one synthetic binder.

6. The filter material according to claim 5, wherein said at least one synthetic binder comprises a styrene/acrylate copolymer, in particular a styrene/n-butyl acrylate copolymer.

7. The filter material according to any one of claims 2 to 4, wherein said at least one binder comprises at least one bio-based binder.

8. The filter material according to any one of the preceding claims, further comprising polyethylene pulp.

9. The filter material according to any one of the preceding claims, wherein said filter material is suitable for tea or coffee.

10. The filter material according to any one of the preceding claims, wherein said filter material is heat-sealable.

11. The filter material according to claims 1 to 9, wherein said filter material is non-heat-sealable.

12. Use of highly beaten cellulosic fibers having a beating degree in the range of from 30 to 80 Schopper Riegler for imparting tensile strength to a filter material comprising transparent viscose fibers.

13. A process for producing a filter material comprising transparent viscose fibers in an amount of from 20 to 95 wt.-% based on the entire filter material, **characterized by** the step of applying highly beaten cellulosic fibers having a beating degree in the range of from 30 to 80 Schopper Riegler in an amount of from 5 to 80 wt.-% based on the entire filter material.

14. The process according to claim 13, further comprising a step of hot embossing the filter material.

15. Tea bag or coffee pad or pod made from the filter material according to any one of claims 1 to 11.

## Patentansprüche

1. Filtermaterial, umfassend transparente Viskosefasern und hoch ausgemahlene cellulosehaltige Fasern mit einem Mahlgrad im Bereich von 30 bis 80 Schopper Riegler, wobei die transparenten Viskosefasern in einer Menge von 20 bis 95 Gew.-%, bezogen auf das gesamte Filtermaterial, enthalten sind und die hoch ausgemahlenen cellulosehaltigen Fasern in einer Menge von 5 bis 80 Gew.-%, bezogen auf das gesamte Filtermaterial, enthalten sind.

2. Filtermaterial nach Anspruch 1, ferner umfassend mindestens ein Bindemittel.

3. Filtermaterial nach Anspruch 1 oder 2, wobei die transparenten Viskosefasern einen flachen Querschnitt aufweisen.

4. Filtermaterial nach einem der vorherigen Ansprüche, wobei die hoch ausgemahlenen cellulosehaltigen Fasern hoch ausgemahlene Abacafasern umfassen.

5. Filtermaterial nach einem der Ansprüche 2 bis 4, wobei das mindestens eine Bindemittel mindestens ein synthetisches Bindemittel umfasst.

6. Filtermaterial nach Anspruch 5, wobei das mindestens eine synthetische Bindemittel ein Styrol/Acrylat-Copolymer, insbesondere ein Styrol/n-Butylacrylat-Copolymer, umfasst.

7. Filtermaterial nach einem der Ansprüche 2 bis 4, wobei das mindestens eine Bindemittel mindestens ein Bindemittel auf biologischer Basis umfasst.

8. Filtermaterial nach einem der vorherigen Ansprüche, ferner umfassend Polyethylen-Faserstoff.

9. Filtermaterial nach einem der vorherigen Ansprüche, wobei das Filtermaterial für Tee oder Kaffee geeignet ist.

10. Filtermaterial nach einem der vorherigen Ansprüche, wobei das Filtermaterial heißsiegelfähig ist.

11. Filtermaterial nach einem der Ansprüche 1 bis 9, wobei das Filtermaterial nicht-heißsiegelfähig ist.

12. Verwendung von hoch ausgemahlenen cellulosehaltigen Fasern mit einem Mahlgrad im Bereich von 30 bis 80 Schopper Riegler, um einem Filtermaterial, das transparente Viskosefasern umfasst, Zugfestigkeit bzw. Bruchfestigkeit zu verleihen.

13. Verfahren zur Herstellung eines Filtermaterials, das transparente Viskosefasern in einer Menge von 20 bis 95 Gew.-%, bezogen auf das gesamte Filtermaterial, umfasst, wobei das Verfahren durch den Schritt des Verwendens von hoch ausgemahlenen cellulosehaltigen Fasern mit einem Mahlgrad im Bereich von 30 bis 80 Schopper Riegler in einer Menge von 5 bis 80 Gew.-%, bezogen auf das gesamte Filtermaterial, gekennzeichnet ist.

14. Verfahren nach Anspruch 13, wobei das Verfahren ferner einen Schritt des Heißprägens des Filtermaterials umfasst.

15. Teebeutel oder Kaffeepad oder -pod, der aus dem Filtermaterial nach einem der Ansprüche 1 bis 11 gemacht ist.

## Revendications

1. Matériau de filtre, comprenant des fibres de viscose transparentes et des fibres cellulosiques hautement raffinées ayant un degré de raffinage dans la plage de 30 à 80 Schopper Riegler, dans lequel les fibres de viscose transparentes sont contenues dans une quantité de 20 à 95 % en poids sur la base du matériau de filtre entier et les fibres cellulosiques hautement raffinées sont contenues dans une quantité de 5 à 80 % en poids sur la base du matériau de filtre entier.

2. Matériau de filtre selon la revendication 1, comprenant en outre au moins un liant.

3. Matériau de filtre selon la revendication 1 ou 2, dans lequel lesdites fibres de viscose transparentes ont une section transversale plate.

4. Matériau de filtre selon l'une quelconque des revendications précédentes, dans lequel lesdites fibres cellulosiques hautement raffinées comprennent des fibres d'abaca hautement raffinées.

5. Matériau de filtre selon l'une quelconque des revendications 2 à 4, dans lequel ledit au moins un liant comprend au moins un liant synthétique.

6. Matériau de filtre selon la revendication 5, dans lequel ledit au moins un liant synthétique comprend un copolymère de styrène/acrylate, en particulier un copolymère de styrène/acrylate de n-butyle.

7. Matériau de filtre selon l'une quelconque des revendications 2 à 4, dans lequel ledit au moins un liant comprend au moins un liant biosourcé.

8. Matériau de filtre selon l'une quelconque des revendications précédentes, comprenant en outre de la pâte de polyéthylène.

9. Matériau de filtre selon l'une quelconque des revendications précédentes, dans lequel ledit matériau de filtre convient pour le thé ou le café.

10. Matériau de filtre selon l'une quelconque des revendications précédentes, dans lequel ledit matériau de filtre est thermosoudable.

11. Matériau de filtre selon les revendications 1 à 9, dans lequel ledit matériau de filtre est non thermosoudable.

12. Utilisation de fibres cellulosiques hautement raffinées ayant un degré de raffinage dans la plage de 30 à 80 Schopper Riegler pour transmettre une résistance à la traction à un matériau de filtre comprenant des fibres de viscose transparentes.

13. Procédé de production d'un matériau de filtre comprenant des fibres de viscose transparentes dans une quantité de 20 à 95 % en poids sur la base du matériau de filtre entier, **caractérisé par** l'étape d'application de fibres cellulosiques hautement raffinées ayant un degré de raffinage dans la plage de 30 à 80 Schopper Riegler dans une quantité de 5 à 80 % en poids sur la base du matériau de filtre entier.

14. Procédé selon la revendication 13, comprenant en outre une étape de gaufrage à chaud du matériau de filtre.

15. Sachet de thé ou dosette de café fabriqué à partir du matériau de filtre selon l'une quelconque des revendications 1 à 11.
